# EUROPEAN PATENT SPECIFICATION

(11) **EP 3 792 056 B1**
(45) Date of publication and mention of the grant of the patent: **02.09.2026**
(21) Application number: 19800401.2
(22) Date of filing: 25.04.2019
(51) Int. Cl.: B32B 27/32, A61J 1/10, B32B 27/00, B65D 65/40, B32B 3/08, B32B 7/10, B32B 27/16

(54) **MULTILAYER BODY, CONTAINER AND INFUSION BAG**
MEHRSCHICHTIGER KÖRPER, BEHÄLTER UND INFUSIONSBEUTEL
CORPS MULTICOUCHE, CONTENANT ET POCHE DE PERFUSION

(30) Priority: 08.05.2018 JP 2018089971
(43) Date of publication of application: 17.03.2021
(73) Proprietor: Mitsubishi Chemical Corporation, Tokyo 100-8251 (JP)
(72) Inventor: WATANABE, Naoya, Tokyo 100-8251 (JP); ISHIHARA, Toshihisa, Tokyo 100-8251 (JP)
(74) Representative: Hoffmann Eitle
(86) International application number: PCT/JP2019/017698
(87) International publication number: WO 2019/216245

(56) References cited:
- EP-A1- 2 311 430
- WO-A1-2007/123241
- WO-A1-2013/047690
- WO-A1-2016/140322
- JP-A- 2009 149 861
- JP-A- 2009 149 861
- JP-A- 2014 208 476
- JP-A- H10 180 951
- US-A1- 2014 213 728

## Description

### Technical Field

The present invention relates to a multilayer body which is excellent in terms of transparency, impact resistance, mechanical strength, and heat-sealing properties, while having performance of a synthetic resin that has gas barrier properties and that can be sterilized at high temperatures; and relates to a container, such as a medical container, and an infusion bag, each using the multilayer body.

### Background Art

Cyclic polyolefins have low mechanical strength and poor affinity (adhesion) to other resins, as compared with polymers composed of chain hydrocarbons, such as polyethylene and polypropylene. However, cyclic polyolefins have many properties required for a container, such as a medical container, for example, excellent transparency, low reactivity (adsorption) to the contents, and stability to chemicals, such as acids and alkalis.

In view of this, many proposals have been made to improve mechanical properties by laminating another resin layer as a reinforcing layer on a cyclic polyolefin layer.

As a means to improve interlayer adhesion when a cyclic polyolefin layer and another resin layer are laminated together, there is a method in which a laminating surface is roughened by chemical treatment with a chemical, plasma treatment, or the like to increase the surface area.

A multilayer body has been proposed in which a cyclic polyolefin having a ketone group introduced into a laminating surface thereof by ultraviolet irradiation and a resin layer having a group that reacts with a ketone group introduced therein are laminated together and bonded together by a bond between the two functional groups (Patent Literature 1).

As compared with a polyethylene resin, a polypropylene resin has excellent properties, such as heat resistance, required as a material for a container, but has weak adhesion to a cyclic polyolefin. Accordingly, a film has been proposed in which lamination is performed by interposing a resin layer, serving as an intermediate layer (bonding layer), the resin layer being obtained by adding polypropylene and the like to linear low-density polyethylene produced by using a single-site catalyst (Patent Literature 2).

A medical container in which a cyclic polyolefin layer and a high-density polyethylene layer are laminated without a bonding layer interposed therebetween has been proposed (Patent Literature 3).

A multilayer container in which a cyclic polyolefin and a polypropylene resin are laminated without using an adhesive has been proposed (Patent Literature 4). In this multilayer container, it is necessary to add a large amount of a styrene-based elastomer to the polypropylene resin layer, giving rise to a problem in that heat resistance of the polypropylene resin layer is impaired. JP 2009-149861 A1 relates to a polypropylene resin composition comprising a crystalline propylene resin, ethylene/alpha-olefin copolymer and a hydrogenated block copolymer. US 2014/0213728 A1 is related to a hydrogenated block copolymer comprising a hydrogenated vinyl aromatic polymer block and a polymer block mainly containing isobutylene. EP 2 311 430 A1 is directed to a plastic container, which is molded by heat-sealing the peripheral portions of multilayered films each comprising a heat sealable seal layer, a cyclic polyolefin layer an, and an outermost layer.

Patent Literature 1: Japanese Unexamined Patent Application Publication No. 2003-25506
Patent Literature 2: Japanese Unexamined Patent Application Publication No. 2005-335108
Patent Literature 3: Japanese Unexamined Patent Application Publication No. 2008-18063
Patent Literature 4: Japanese Unexamined Patent Application Publication No. 2011-93209

In the past, in a container or medical container provided with a cyclic polyolefin layer, various developments have been made regarding lamination for improving mechanical strength (improvement in brittleness), heat-sealing properties, and the like while maintaining intrinsic properties of the cyclic polyolefin as a material for a container. However, although mechanical properties of the cyclic polyolefin can be improved by laminating another resin layer, such as polyethylene or polypropylene, transparency of the cyclic polyolefin is degraded by laminating the other resin layer.

In particular, when the multilayer body is used in a medical container, since high-temperature sterilization treatment is required before use, from the viewpoint of heat resistance, a polypropylene resin is used as a base material in many cases.

As in existing cases, when a bonding layer is provided between a polypropylene resin and a cyclic polyolefin layer, there is a concern that components of the bonding layer may be mixed into a pharmaceutical (drug) inside the container. Therefore, it has been strongly desired to provide a container or medical container formed of a multilayer body in which a bonding layer is not used.

### Summary of Invention

It is an object of the present invention to provide a multilayer body including a base material layer containing a polypropylene resin and a heat seal layer containing a cyclic polyolefin, in which transparency of the cyclic polyolefin is less affected, and the base material layer made of the polypropylene resin and the heat seal layer made of the cyclic polyolefin can be laminated without using a bonding layer, and in which, while maintaining heat resistance, excellent heat-sealing properties are exhibited, and to provide a container, such as a medical container, or an infusion bag which includes the multilayer body.

The present inventors have repeatedly studied cyclic polyolefins having adhesion required as a laminating material to a polypropylene resin layer and excellent heat-sealing properties, and as a result, have found that, among cyclic polyolefins, a hydrogenated block copolymer obtained by hydrogenating a block copolymer having at least two polymer blocks P derived from an aromatic vinyl monomer and at least one polymer block Q derived from a conjugated diene monomer has a high degree of transparency and high heat seal strength at high temperatures when, together with a polypropylene resin layer, formed into a multilayer body, as compared with existing cyclic polyolefins composed of monomers having a norbornene skeleton.

Furthermore, it has been found that this specific hydrogenated block copolymer has excellent adhesion to a polyolefin resin and can be easily formed into a multilayer body or a container by coextrusion or the like even without using a bonding layer which has been needed for adhesion between a polypropylene resin layer and a cyclic polyolefin layer in the past, and because of its excellent transparency, heat resistance, and heat-sealing properties, the container is most suitable as a medical container having storability and visibility of the content, thus leading to completion of the present invention.

That is, the present invention has the following characteristics:
[1] A multilayer body comprising a base material layer containing a polypropylene resin and a heat seal layer containing a cyclic polyolefin,
   wherein the cyclic polyolefin is a hydrogenated block copolymer having a hydrogenated aromatic vinyl polymer block unit which is a hydrogenated polymer block composed of aromatic vinyl monomer units and a hydrogenated conjugated diene polymer block unit which is a hydrogenated polymer block composed of conjugated diene monomer units, and
   the hydrogenated block copolymer has at least two hydrogenated aromatic vinyl polymer block units and at least one hydrogenated conjugated diene polymer block unit.
[2] The multilayer body according to [1], wherein the content of the hydrogenated aromatic vinyl polymer block unit in the hydrogenated block copolymer is 50 to 99 mol%.
[3] The multilayer body according to [1] or [2], wherein the adhesion strength (before heat treatment) between the base material layer containing the polypropylene resin and the heat seal layer containing the cyclic polyolefin is 30 N/15 mm or more.
[4] The multilayer body according to any one of [1] to [3], wherein the adhesion strength (after heat treatment) between the base material layer containing the polypropylene resin and the heat seal layer containing the cyclic polyolefin is 30 N/15 mm or more.
[5] A container comprising a multilayer body as defined in any of [1] to [4], the container being formed by joining portions of the heat seal layer of the multilayer body.
[6] The container according to [6], wherein the hydrogenated aromatic vinyl polymer block unit has a hydrogenation level of 90% or more, and the hydrogenated conjugated diene polymer block unit has a hydrogenation level of 95% or more.
[7] The container according to [5] or [6], wherein the hydrogenated aromatic vinyl polymer block unit consists of hydrogenated polystyrene, and the content of the hydrogenated polystyrene in the cyclic polyolefin is 50 to 99 mole percent.
[8] The container according to any one of [5] to [7], wherein the hydrogenated conjugated diene polymer block unit consists of hydrogenated polybutadiene, and the content of the hydrogenated polybutadiene in the cyclic polyolefin is 1 to 50 mole percent.
[9] The container according to any one of [5] to [8], wherein the base material layer and the heat seal layer are directly laminated.
[10] The container according to any one of [5] to [9], wherein the polypropylene resin of the base material layer and the heat seal layer are directly laminated.
[11] The container according to any one of [5] to [10], wherein the base material layer is made of a polypropylene resin.
[12] A medical container comprising the container according to any one of [5] to [11].
[13] An infusion bag comprising the medical container according to [12].
[14] The infusion bag according to [13] including a port portion.
[15] The infusion bag according to [14], wherein the port portion contains a polypropylene resin.
[16] The infusion bag according to [14] or [15], wherein the port portion and the heat seal layer are directly heat-sealed to each other.
[17] The infusion bag according to any one of [14] to [16], wherein the port portion is made of a polypropylene resin.
[18] A medical container comprising a multilayer body as defined in any of [1] to [4], the medical container being formed by joining portions of the heat seal layer of the multilayer body.

### Advantageous Effects of Invention

In the present invention, the specific hydrogenated block copolymer used for the heat seal layer has excellent heat-sealing properties and high adhesion to a polypropylene resin and can be easily formed into a multilayer body or a container by coextrusion or the like without interposing a bonding layer, and it is possible to obtain excellent adhesion to the polypropylene resin. Furthermore, even at high temperatures, excellent transparency and adhesion strength are exhibited, and since a bonding layer is not used, there is no concern of mixture of impurities into the content (pharmaceutical, drug solution). Thus, as a medical container, excellent storability and visibility of the content can be obtained.

### Description of Embodiments

Although the present invention will be described in detail below, the following description is an example of embodiments of the present invention, and the present invention is not limited to the following description unless the present invention exceeds the gist thereof. The present invention can be arbitrarily modified and implemented within a scope that does not depart from the gist of the present invention.

In the following description, the term "to" is used so as to mean that the numerical values or physical property values described before and after it are included as a lower limit and an upper limit, respectively.

A multilayer body of the present invention includes a base material layer containing a polypropylene resin and a heat seal layer containing a cyclic polyolefin, characterized in that the cyclic polyolefin is a hydrogenated block copolymer having a hydrogenated aromatic vinyl polymer block unit which is a hydrogenated polymer block composed of aromatic vinyl monomer units and a hydrogenated conjugated diene polymer block unit which is a hydrogenated polymer block composed of conjugated diene monomer units, and the hydrogenated block copolymer has at least two hydrogenated aromatic vinyl polymer block units and at least one hydrogenated conjugated diene polymer block unit.

A container of the present invention includes a multilayer body which includes a base material layer containing a polypropylene resin and a heat seal layer containing a cyclic polyolefin, the container being formed by joining portions of the heat seal layer of the multilayer body, characterized in that the cyclic polyolefin is a hydrogenated block copolymer having a hydrogenated aromatic vinyl polymer block unit which is a hydrogenated polymer block composed of aromatic vinyl monomer units and a hydrogenated conjugated diene polymer block unit which is a hydrogenated polymer block composed of conjugated diene monomer units, and the hydrogenated block copolymer has at least two hydrogenated aromatic vinyl polymer block units and at least one hydrogenated conjugated diene polymer block unit.

That is, a container or medical container of the present invention includes a multilayer body which includes a base material layer containing a polypropylene resin and a heat seal layer, the container or medical container being formed by joining portions of the heat seal layer of the multilayer body, characterized in that the heat seal layer contains a hydrogenated block copolymer obtained by hydrogenating, i.e., hydrogenating, a block copolymer having at least two polymer blocks P derived from an aromatic vinyl monomer and at least one polymer block Q derived from a conjugated diene monomer.

In the present description, the term "hydrogenated block copolymer" may be expressed as "the hydrogenated block copolymer".

Furthermore, in the present description, the term "hydrogenated block copolymer" or "hydrogenated block copolymer" may be expressed as "the hydrogenated block copolymer having a hydrogenated aromatic vinyl polymer block unit which is a hydrogenated polymer block composed of aromatic vinyl monomer units and a hydrogenated conjugated diene polymer block unit which is a hydrogenated polymer block composed of conjugated diene monomer units, the hydrogenated block copolymer having at least two hydrogenated aromatic vinyl polymer block units and at least one hydrogenated conjugated diene polymer block unit".

The cyclic polyolefin according to the present invention is a resin composed of the hydrogenated block copolymer. That is, the cyclic polyolefin according to the present invention is a resin composed of the hydrogenated block copolymer.

Note that the "cyclic" of the "cyclic polyolefin" refers to an alicyclic structure formed by hydrogenation of an aromatic ring, possessed by the hydrogenated aromatic vinyl polymer block unit.

Hereinafter, the multilayer body constituting the container or medical container of the present invention is referred to as the "multilayer body of the present invention", and the base material layer and the heat seal layer in the multilayer body are referred to as the "base material layer of the present invention" and the "heat seal layer of the present invention", respectively. Furthermore, the polypropylene resin in the base material layer may be referred to as the "polypropylene resin of the present invention", and a specific hydrogenated block copolymer in the heat seal layer may be referred to as the "hydrogenated block copolymer of the present invention", the "hydrogenated block copolymer of the present invention", or the "cyclic polyolefin or the present invention" in some cases.

### <Mechanism>

In the container or medical container of the present invention, the hydrogenated block copolymer of the present invention used in the heat seal layer is a hydrogenated block copolymer obtained by hydrogenating a block copolymer having at least two polymer blocks P (hereinafter, may be simply referred to as the "blocks P") derived from an aromatic vinyl monomer and at least one polymer block Q (hereinafter, may be simply referred to as the "block Q") derived from a conjugated diene monomer. Since the hydrogenated block copolymer is a hydrogenated product of a block copolymer having at least two blocks P and at least one block Q as described above, excellent adhesion to the polypropylene resin of the base material layer and heat-sealing properties are exhibited.

Furthermore, since the hydrogenated block copolymer is a hydrogenated block copolymer which is amorphous and has a high heat distortion temperature, it has excellent heat resistance and also has excellent transparency and transparency after heat treatment.

### <Heat seal layer>

In the present invention, "heat seal" is a term representing "heat fusion property to an adherend". Furthermore, the "heat seal layer" is a term representing the "layer having a heat fusion property to an adherend". These terms are commonly used by persons skilled in the art.

The heat seal layer of the present invention contains the hydrogenated block copolymer of the present invention, i.e., the cyclic polyolefin of the present invention. The heat seal layer of the present invention may contain only one hydrogenated block copolymer of the present invention or may contain two or more hydrogenated block copolymers having different compositions, physical properties, etc.

The heat seal layer of the present invention contains the hydrogenated block copolymer of the present invention, but a polyethylene resin, a polypropylene resin, a styrene-based elastomer, and the like may be incorporated within a range that does not impair physical properties as a medical container, in particular, transparency. However, from the viewpoint of obtaining the effect caused by use of the hydrogenated block copolymer of the present invention, the amount of the hydrogenated block copolymer of the present invention contained in the heat seal layer is usually 35% by weight or more, and preferably 40% to 100% by weight.

### <Hydrogenated block copolymer>

The hydrogenated block copolymer of the present
invention is a hydrogenated block copolymer obtained by hydrogenating (hereinafter, may be referred to as "hydrogenating") a block copolymer having at least two polymer blocks P derived from an aromatic vinyl monomer and at least one polymer block Q derived from a conjugated diene monomer (hereinafter, may be referred to as the "block copolymer of the present invention").

In the following description, a block obtained by hydrogenating a block P is referred to as the "hydrogenated block P", and a block obtained by hydrogenating a block Q is referred to as the "hydrogenated block Q".

Furthermore, the hydrogenated block copolymer of the present invention can also be expressed as follows.

The hydrogenated block copolymer of the present invention has a hydrogenated aromatic vinyl polymer block unit which is a hydrogenated polymer block composed of aromatic vinyl monomer units and a hydrogenated conjugated diene polymer block unit which is a hydrogenated polymer block composed of conjugated diene monomer units, and has at least two hydrogenated aromatic vinyl polymer block units and at least one hydrogenated conjugated diene polymer block unit.

The aromatic vinyl monomer serving as a starting material for the hydrogenated block copolymer is a monomer represented by the following formula (1).

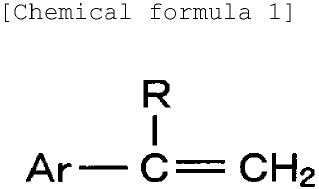

In the formula, R is hydrogen or an alkyl group, and Ar is a phenyl group, halophenyl group, alkyl phenyl group, alkyl halophenyl group, naphthyl group, pyridinyl group, or anthracenyl group.

The alkyl group has 1 to 6 carbon atoms which may be mono- or poly-substituted with functional groups, such as a halo group, a nitro group, an amino group, a hydroxy group, a cyano group, a carbonyl group, and a carboxyl group.

Ar is preferably a phenyl group or alkyl phenyl group, and more preferably a phenyl group.

Examples of the aromatic vinyl monomer include styrene, α-methylstyrene, vinyltoluene, ethylstyrene, propylstyrene, butylstyrene, vinylbiphenyl, vinylnaphthalene, and vinylanthracene, and isomers thereof, and mixtures thereof. Preferred are styrene and α-methylstyrene, and more preferred is styrene.

The conjugated diene monomer serving as a starting material for the hydrogenated block copolymer can be any monomer having two conjugated double bonds, and examples thereof include 1,3-butadiene, 2-methyl-1,3-butadiene (isoprene), 2-methyl-1,3-pentadiene and its analogs, and mixtures thereof. Preferred are 1,3-butadiene and isoprene, and more preferred is 1,3-butadiene.

The block P is preferably a polystyrene block.

The block Q is preferably a polybutadiene block.

Polybutadiene, which is a polymer of 1,3-butadiene, can contain either a 1,2 configuration, hydrogenation of which gives the equivalent of a 1-butene repeat unit, or a 1,4 configuration, hydrogenation of which gives the equivalent of an ethylene repeat unit.

Preferably, the block copolymer and the hydrogenated block copolymer of the present invention are a block copolymer having no functional group and a hydrogenated block copolymer having no functional group. The term "no functional group" refers to the absence of groups containing atoms other than carbon and hydrogen atoms within the block copolymer and the hydrogenated block copolymer.

Preferred examples of the hydrogenated block P, i.e., the hydrogenated aromatic vinyl polymer block unit, include hydrogenated polystyrene.

Preferred examples of the hydrogenated block Q, i.e., the hydrogenated conjugated diene polymer block unit, include hydrogenated polybutadiene.

In one preferred embodiment, the hydrogenated block copolymer is a hydrogenated triblock or pentablock copolymer of styrene and butadiene. Preferably, the hydrogenated block copolymer does not contain any other functional groups or structural modifiers.

A "block" is herein defined as a polymeric segment of a copolymer which exhibits microphase separation from a structurally and compositionally different polymeric segment. Microphase separation occurs due to the incompatibility of the polymeric segments within the block copolymer.

Microphase separation and block copolymers are widely discussed in "Block Copolymers-Designer Soft Materials", PHYSICS TODAY, February, 1999, pp. 32-38.

The content of the hydrogenated block P in the hydrogenated block copolymer is preferably 50 to 99 mole percent, and more preferably 60 to 90 mole percent.

When the content of the hydrogenated block P is equal to or greater than the lower limit, rigidity does not decrease, and when the content of the hydrogenated block P is equal to or less than the upper limit, brittleness does not deteriorate.

The content of the hydrogenated block Q in the hydrogenated block copolymer is preferably 1 to 50 mole percent, and more preferably 10 to 40 mole percent.

When the content of the hydrogenated block Q is equal to or greater than the lower limit, brittleness does not deteriorate, and when the content of the hydrogenated block Q is equal to or less than the upper limit, rigidity does not decrease.

Hydrogenated block copolymers are produced by the hydrogenation of block copolymers including triblock, multiblock, tapered block, and star block copolymers, such as SBS, SBSBS, SIS, SISIS, and SISBS (wherein S is polystyrene, B is polybutadiene, and I is polyisoprene).

The hydrogenated block copolymers contain a segment composed of an aromatic vinyl polymer on each end. Therefore, the hydrogenated block copolymer of the present invention has at least two hydrogenated aromatic vinyl polymer block units (hydrogenated blocks P). There is at least one hydrogenated conjugated diene polymer block unit (hydrogenated block Q) between the two hydrogenated aromatic vinyl polymer block units.

The block copolymer before hydrogenation constituting the hydrogenated block copolymer may contain any number of additional blocks, in which these blocks may be attached at any position of the triblock polymer backbone. Thus, linear blocks include, for example, SBS, SBSB, SBSBS, and SBSBSB. The copolymer can also be branched, in which polymer chains may be attached at any position along the copolymer backbone.

From the viewpoint of adhesion of the base material layer to the polypropylene resin, the hydrogenation ratio of each of the blocks P and Q of the hydrogenated block copolymer of the present invention is preferably as high as possible. The "hydrogenation ratio" can also be expressed as the "hydrogenation level".

Preferably, the hydrogenation ratio of the hydrogenated block P is 90% or more, and the hydrogenation ratio of the hydrogenated block Q is 95% or more. More preferably, the hydrogenation ratio of the hydrogenated block P is 95% or more, and the hydrogenation ratio of the hydrogenated block Q is 99% or more. Still more preferably, the hydrogenation ratio of the hydrogenated block P is 98% or more, and the hydrogenation ratio of the hydrogenated block Q is 99.5% or more. Most preferably, the hydrogenation ratio of the hydrogenated block P is 99.5% or more, and the hydrogenation ratio of the hydrogenated block Q is 99.5% or more.

The term "hydrogenation ratio" as used herein refers to the ratio at which the unsaturated bond before hydrogenation is saturated by hydrogenation. The hydrogenation ratio of each of the hydrogenated blocks P and Q is determined using proton NMR.

The lower limit of the weight average molecular weight (Mw) of the hydrogenated block copolymer is preferably 30,000 or more, more preferably 40,000 or more, still more preferably 45,000 or more, and most preferably 50,000 or more. The upper limit of the weight average molecular weight (Mw) of the hydrogenated block copolymer is preferably 120,000 or less, more preferably 100,000 or less, still more preferably 95,000 or less, most preferably 90,000 or less, particularly preferably 85,000 or less, and extremely preferably 80,000 or less.

The weight average molecular weight (Mw) of the hydrogenated block copolymer of the present invention is the polystyrene equivalent value determined using gel permeation chromatography (GPC).

The hydrogenated block copolymer preferably has the following physical properties:
Density (ASTM D792): 0.92 to 0.96 g/cm³
MFR (ISO R1133 (measurement temperature 230°C, load 2.16 kg)): 1 to 300 g/10 min
Glass transition temperature (Tg): 110 to 135°C
Flexural modulus of elasticity (ISO 178): 1,500 to 2,700 MPa

When the density is equal to or greater than the above lower limit, heat resistance is improved. When the density is equal to or less than the above upper limit, impact resistance and flexibility are improved.

It is preferable that the MFR (melt flow rate) be within the above range from the viewpoint of moldability.

When the flexural modulus of elasticity is equal to or greater than the above lower limit, heat-sealing properties are improved. When the flexural modulus of elasticity is equal to or less than the above upper limit, impact resistance and flexibility are improved.

From the viewpoint of heat resistance and sterilization treatment, the Tg is preferably 110°C or higher, and more preferably 115°C or higher.

As the hydrogenated block copolymer of the present invention, i.e., the cyclic polyolefin, a commercially available one can be used. Specifically, for example, ZELAS (registered trademark) manufactured by Mitsubishi Chemical Corporation may be used.

### <Base material layer>

The base material layer of the present invention contains a polypropylene resin.

The base material layer may contain only one polypropylene resin or may contain two or more polypropylene resins having different compositions, physical properties, etc.

The base material layer contains 70% by weight or more, preferably 80 to 100% by weight, of the polypropylene resin.

In the case where the base material layer includes a plurality of layers, preferably, a layer of the polypropylene resin is configured to be located on the surface side and to be in contact with the heat seal layer.

Furthermore, preferably, the base material layer is made of the polypropylene resin.

The base material layer may contain additives, such as antioxidants, anti-fogging agents, and lubricants, which are used in the relevant field within the range that does not impair the characteristics as a medical container, in particular, mechanical strength (impact resistance) and transparency.

Transparent containers are in great demand, particularly, in the pharmaceutical and food fields. However, some pharmaceuticals are substances that are unstable to light, and when such pharmaceuticals are accommodated, colorants or light-shielding agents such as titanium oxide may be optionally incorporated.

### <Polypropylene resin>

The polypropylene resin of the present invention contains propylene as a main component. Here, the expression "contains as a main component" means that the resin contains more than 50% by weight of a propylene polymer, in particular, preferably 60% by weight or more of a propylene polymer, and the upper limit of the content is 100% by weight. When the content of the propylene polymer in the polypropylene resin of the present invention is equal to or greater than the above lower limit, handling properties as a multilayer body are improved.

The term "propylene polymer" as used herein means a polymer which contains more than 50 mole percent of propylene relative to the total monomer components as starting materials.

The polypropylene resin of the present invention may contain components other than the propylene polymer, and for example, may contain a styrene-based elastomer and/or a hydrogenated product thereof. Examples of the styrene-based elastomer include one having a styrene polymer block and a conjugated diene polymer block, the conjugated diene polymer block being derived from butadiene, isoprene, or the like.

When a styrene-based elastomer and/or a hydrogenated product thereof is used, the content thereof is preferably 10 to 40% by weight, more preferably 15 to 30% by weight, relative to the total of the propylene polymer and the styrene-based elastomer and/or the hydrogenated product thereof.

The polypropylene resin of the present invention preferably has the following physical properties:
Melting point: 121 to 160°C
Density (JIS K7112): 0.88 to 0.91 g/cm³
MFR (JIS K7210 (measurement temperature 230°C, load 2.16 kg)): 1.0 to 10 g/min
Flexural modulus of elasticity (ISO 178): 300 to 1,500 MPa

When the density of the polypropylene resin of the present invention constituting the base material layer is equal to or greater than the above lower limit, heat-sealing properties are improved. When the density is equal to or less than the above upper limit, transparency is improved.

It is preferable that the MFR (melt flow rate) be within the above range from the viewpoint of moldability.

When the flexural modulus of elasticity is equal to or greater than the above lower limit, heat-sealing properties are improved. When the flexural modulus of elasticity is equal to or less than the above upper limit, impact resistance and flexibility are improved.

From the viewpoint of heat resistance and sterilization treatment, the melting point is preferably 121°C or higher, and more preferably 125°C or higher. On the other hand, the upper limit of the melting point of the polypropylene resin is usually about 160°C.

As the polypropylene resin of the present invention, a commercially available one can be used. Specific examples thereof include NOVATEC PP, WELNEX, and WINTEC manufactured by Japan Polypropylene Corporation.

### <Multilayer body>

A multilayer body of the present invention includes a heat seal layer of the present invention and a base material layer of the present invention.

In the multilayer body of the present invention, preferably, the heat seal layer of the present invention and the base material layer of the present invention are directly laminated without an intermediate layer such as a bonding layer being interposed therebetween.

The multilayer body of the present invention can be produced by any method as long as the layers can be laminated and integrated. Examples of the production method include dry lamination, extrusion lamination, coextrusion lamination (T-die method, water-cooling inflation method, air-cooling inflation method), heat lamination, and lamination methods in which these methods are combined.

Among these methods, the water-cooling inflation method is preferable from the viewpoint of obtaining transparency of the entire multilayer body and from the viewpoint of obtaining the sealing property of the inner layer.

In the multilayer body of the present invention, the thickness of each of the layers can be appropriately selected depending on intended use. The thickness of the heat seal layer is preferably 5 to 100 µm, and more preferably 10 to 50 µm. It is preferable that the thickness of the heat seal layer be equal to or greater than the above lower limit from the viewpoint of stability in heat seal strength, and it is preferable that the thickness of the heat seal layer be equal to or less than the above upper limit from the viewpoint of flexibility of the entire multilayer body.

When the heat seal layer is too thick, rigidity increases and cracks are likely to occur. When the heat seal layer is too thin, there is a concern that the low adsorption effect of the content cannot be obtained, and it may not be possible to suppress water vapor transmission in some cases.

In the multilayer body of the present invention, the thickness of the base material layer is preferably 100 µm or more, for example, 140 to 330 µm, and more preferably 150 to 250 µm. The base material layer, which serves as an outer layer of the multilayer body, is mainly responsible for improvement in mechanical strength and heat-sealing properties, and the like. It is preferable that the thickness of the base material layer be equal to or greater than the above lower limit from the viewpoint of mechanical strength, and it is preferable that the thickness of the base material layer be equal to or less than the above upper limit from the viewpoint of flexibility of the entire multilayer body.

In the multilayer body of the present invention, preferably, the thickness ratio (heat seal layer): (base material layer) = 1:30 to 1:3.

In the multilayer body of the present invention, the adhesion strength (before heat treatment) between the base material layer and the heat seal layer, which is measured by a method described later in Examples, is preferably 30 N/15 mm or more.

In the multilayer body of the present invention, the adhesion strength (after heat treatment) between the base material layer and the heat seal layer, which is measured by a method described later in Examples, is preferably 30 N/15 mm or more.

### <Container>

As the method of producing a container using the multilayer body of the present invention, any method may be used, and examples include sheet forming methods (thermoforming methods) such as vacuum forming and air-pressure forming, blow molding methods such as multilayer coextrusion blow molding, and a method in which peripheral portions of sheet-like multilayer bodies, which have been cut into a predetermined shape, are bonded together by heat fusion bonding (strong welding) or with an adhesive to form a bag-like product.

Examples of the use of the container of the present invention include food use, industrial use, industrial material use, and medical use.

Examples of the shape of the container include, but are not particularly limited to, a bottle, a tube, a bag, and a cell.

### <Medical container>

As the method of producing a medical container using the multilayer body of the present invention, any method may be used, and examples include sheet forming methods (thermoforming methods) such as vacuum forming and air-pressure forming, blow molding methods such as multilayer coextrusion blow molding, and a method in which peripheral portions of sheet-like multilayer bodies, which have been cut into a predetermined shape, are bonded together by heat fusion bonding (strong welding) or with an adhesive to form a bag-like product.

When producing a medical container of the present invention, a weak sealed portion which divides the inside of the container into a plurality of storage chambers can be formed by partially heat fusion bonding the opposing inner wall surfaces of the container, using a bar seal or the like whose heat seal temperature is controlled.

The heat fusion bonding temperature at the time of forming the weak sealed portion, which varies depending on the composition of the hydrogenated block copolymer of the present invention, the thickness of each of the heat seal layer and the entire multilayer body, and the like, is usually about 140 to 160°C. The heat seal strength of the weak sealed portion that can be easily peeled, in terms of the peel strength measured by a method described later in Examples, is preferably less than 10 N/10 mm, and more preferably 0.1 to 9 N/10 mm.

When the heat seal strength of the weak sealed portion is too high, the weak sealed portion cannot be easily peeled. When the heat seal strength is too low, the weak sealed portion peels off due to a small impact applied unintendedly, and the purpose of partitioning the storage chambers until immediately before use cannot be achieved.

On the other hand, for example, in the case where a strong sealed portion is formed by heat fusion bonding of peripheral portions of sheet-like multilayer bodies, which have been cut into a predetermined shape, the heat fusion bonding temperature, which varies depending on the composition of the hydrogenated block copolymer of the present invention, the thickness of each of the heat seal layer and the entire multilayer body, and the like, is usually about 180 to 220°C. The heat seal strength of the strong sealed portion for isolating the inside of the container from the outside (outside air), in terms of the peel strength measured by the method described later in Examples, is preferably 10 N/10 mm or more.

When the heat seal strength of the strong sealed portion is too low, the strength required as a multi-chamber container cannot be satisfied. The higher the heat seal strength of the strong sealed portion, the more desirable, but the upper limit thereof is usually about 60 N/10 mm.

In order to facilitate the control of the heat seal temperature of each of the weak sealed portion and the strong sealed portion, the heat fusion bonding temperature at which the strong sealed portion is formed is preferably set to be 10°C or more higher than the heat fusion bonding temperature at which the weak sealed portion is formed.

The medical container of the present invention is usually provided as a multi-chamber container in which a linear weak sealed portion is disposed so as to divide the inside of the container into two, and two storage chambers are provided. However, the configuration is not limited thereto. For example, the inside of the container may be divided into three or more chambers by a plurality of linear weak sealed portions.

Examples of the shape of the medical container of the present invention include, but are not particularly limited to, a bottle, a tube, a bag, and a cell.

### <Contents of medical container>

The contents, such as drugs, to be stored in the storage chambers of the medical container of the present invention are not particularly limited. Because of the excellent storage stability and the like of the multi-chamber container of the present invention, the medical container of the present invention can be suitably used as a multi-chamber container for accommodating a high-calorie infusion consisting of amino acids, sugars, electrolytes, and vitamins, and the like.

### <Infusion bag>

The medical container of the present invention is particularly suitable as an infusion bag.

An infusion bag usually includes a main body of the infusion bag, a port portion for injecting a drug solution, and a cap including a rubber stopper for taking out the drug solution. In the medical container of the present invention, when used as such an infusion bag having a port portion, since the heat seal layer of the present invention has a high fusion property to the polypropylene resin generally used for the port portion, the heat seal layer and the port portion can be easily combined together, and thus, the medical container can be suitably used.

In the infusion bag of the present invention, preferably, the heat seal layer and the port portion are directly heat-sealed to each other without an intermediate layer such as a bonding layer being interposed therebetween.

In the case where the port portion is formed of a plurality of materials, preferably, a polypropylene resin layer is disposed at a surface of the port portion, and this layer is configured to be in contact with the heat seal layer.

The port portion is preferably made of a polypropylene resin.

The heat seal strength between the port portion of the infusion bag and the heat seal layer, in terms of the peel strength measured by the method described later in Examples, is preferably 10 N/10 mm or more, and more preferably 15 N/10 mm or more.

The method of forming an infusion bag using the multilayer body of the present invention is not limited, but a method in which a tubular (cylindrical) inflation film is formed by coextrusion, and ends are fusion bonded together can be preferably employed.

### EXAMPLES

The present invention will be more specifically described below with reference to examples and comparative examples, but it is to be understood that the present invention is not limited to the examples.
The values of various production conditions and evaluation results given in the following examples mean preferable values of the upper limits or lower limits for embodiments of the present invention, and the preferable ranges may be a range specified by a combination between the upper-limit or lower-limit value described hereinabove and values in the following examples or between values in the following examples.

### <Melt flow rate (MFR)>

·Device: "Melt indexer" manufactured by Toyo Seiki Seisaku-sho, Ltd.
·Temperature: 230°C
·Orifice hole diameter: 2 mm
·Load: 21.18 N

### <Molecular weight>

·Device: "GPC HLC-832GPC/HT" manufactured by Tosoh Corporation
·Detector: "1A infrared spectrophotometer" manufactured by MIRAN (measurement wavelength 3.42 µm)
·Column: 3 "AD806M/S" manufactured by Showa Denko K.K.
·Column calibration: Monodisperse polystyrenes manufactured by Tosoh (A500, A2500, F1, F2, F4, F10, F20, F40, and F288, each 0.5 mg/ml solution) were measured. The elution volumes and the logarithms of the molecular weights were approximated by a cubic polynomial.
·Measurement temperature: 135°C
·Concentration: 20 mg/10 mL
·Injection volume: 0.2 ml
·Solvent: ortho-dichlorobenzene
·Flow rate: 1.0 ml/min

### <Polymer block ratio>

### [Carbon NMR measurement]

·Device: "AVANCE 400 spectrometer" manufactured by Bruker Corporation
·Solvent: ortho-dichlorobenzene-h4/para-dichlorobenzene-d4 mixed solvent
·Concentration: 0.3 g/2.5 mL
·Measurement: ¹³C-NMR
·Resonance frequency: 400 MHz
·accumulation number: 1536
·Flip angle: 45 degrees
·Data acquisition time: 1.5 seconds
·Pulse repetition time: 15 seconds
·Measurement temperature: 100°C
·¹H irradiation: complete decoupling

### <Hydrogenation ratio of hydrogenated block P (hydrogenated aromatic vinyl polymer block unit), hydrogenation ratio of hydrogenated block Q (hydrogenated conjugated diene polymer block unit)>

### [Proton NMR measurement]

·Device: "400YH spectrometer" manufactured by JASCO Corporation
·Solvent: deuterochloroform
·Concentration: 0.045 g/1.0 mL
·Measurement: ¹H-NMR
·Resonance frequency: 400 MHz
·Accumulation number: 8
·Measurement temperature: 18.5°C
·Hydrogenation ratio of hydrogenated block P: integrated value reduction rate of 6.8 to 7.5 ppm
·Hydrogenation ratio of hydrogenated block Q: integrated value reduction rate of 5.7 to 6.4 ppm

### [Starting materials]

Starting materials used in the following examples and comparative examples are as follows.

### <Component A: resin for heat seal layer>

### [A-1 Cyclic polyolefin]

Hydrogenated block copolymer of the present invention: "ZELAS (registered trademark)" manufactured by Mitsubishi Chemical Corporation
·Density (ASTM D792): 0.94 g/cm³
·MFR (230°C, 2.16 kg (ISO R1133)): 20.0 g/10 minutes
·Tg: 117°C
·Flexural modulus of elasticity (ISO 178): 2,500 MPa
·Mw: 54,200
·Hydrogenated block P: content 60 mole percent, hydrogenated polystyrene with a hydrogenation ratio of 99.5% or more
·Hydrogenated block Q: content 40 mole percent, hydrogenated polybutadiene with a hydrogenation ratio of 99.5% or more
·Block structure: pentablock structure, total hydrogenation ratio 99.5% or more

### [A-2 Cyclic polyolefin]

Hydrogenated block copolymer of the present invention: "ZELAS (registered trademark) MC930" manufactured by Mitsubishi Chemical Corporation
·Density (ASTM D792): 0.94 g/cm³
·MFR (230°C, 2.16 kg (ISO R1133)): 1.3 g/10 minutes
·Tg: 129°C
·Flexural modulus of elasticity (ISO 178): 2,600 MPa
·Mw: 75,600
·Hydrogenated block P: content 65 mole percent, hydrogenated polystyrene with a hydrogenation ratio of 99.5% or more
·Hydrogenated block Q: content 35 mole percent, hydrogenated polybutadiene with a hydrogenation ratio of 99.5% or more
·Block structure: pentablock structure, total hydrogenation ratio 99.5% or more

### [a-1 Cyclic polyolefin]

Cyclic polyolefin polymer (ring-opening polymer of norbornene-based monomer) "ZEONOR (registered trademark) 1020R" manufactured by Zeon Corporation
·Density (ASTM D792): 1.01 g/cm³
·MFR (230°C, 2.16 kg (ISO R1133)): 3 g/10 minutes
·Tg: 102°C
·Flexural modulus of elasticity (ISO 178): 2,100 MPa

### [a-2 Cyclic polyolefin]

Cyclic polyolefin copolymer (norbornene-ethylene copolymer) "TOPAS (registered trademark) 8007F-04" manufactured by Polyplastics Co., Ltd.
·Density (ISO 1183): 1.01 g/cm³
·MFR (230°C, 2.16 kg (ISO R1133)): 12.6 g/10 minutes
·Tg: 78°C
·Flexural modulus of elasticity (ISO 178): 2,500 MPa

### <Component B: resin for base material layer>

### [B-1: Polypropylene resin]

"NOVATEC PP FW4B" manufactured by Japan Polypropylene Corporation
·Propylene unit content: 96% by weight
·Melting point: 140°C
·Density (JIS K7112): 0.90 g/cm³
·MFR (230°C, 2.16 kg (JIS K7210)): 7 g/10 minutes
·Flexural modulus of elasticity (ISO 178): 850 MPa

### [B-2: Polypropylene resin]

"NOVATEC PP FL4" manufactured by Japan Polypropylene Corporation
·Propylene unit content: 100% by weight
·Melting point: 160°C
·Density (JIS K7112): 0.90 g/cm³
·MFR (230°C, 2.16 kg (JIS K7210)): 5 g/10 minutes
·Flexural modulus of elasticity (ISO 178): 1,400 MPa

### [Examples 1 to 4, Comparative Example 1 to 3]

### <Production of film for evaluation>

Using a two-layer sheet forming machine, the cyclic polyolefin and the polypropylene resin shown in Table 1 for each example were coextruded at a forming temperature of 250°C to produce a film for evaluation of two-layer lamination with a thickness of 200 µm (cyclic polyolefin layer: 100 µm/polypropylene resin layer: 100 µm).

In Comparative Example 3, since many fisheyes were generated in the film obtained by production of the film for evaluation, the subsequent evaluation was not performed.

Furthermore, all the films for evaluation were produced for the purpose of evaluation, and the thickness thereof was not in the practically optimum range.

### <Production of container for evaluation>

The resulting film for evaluation was cut into sheets of 80 × 100 mm. Two of the sheets were overlapped such that the cyclic polyolefin layers faced each other, and heat sealing was performed under the conditions described below using a heat sealer (manufactured by Sagawa Manufacturing, Inc.) to produce a container with an overall size of 80 × 100 mm. The inside of the container was filled with about 50 cc of water, thus preparing a container for evaluation.
Pressure: 0.3 MPa
Time: 3.0 seconds
Seal bar: 10 mm
Temperature: 240°C

### <High-temperature, high-pressure sterilization treatment>

The resulting film for evaluation and container for evaluation were placed in a high-temperature, high-pressure cooking sterilization testing machine ("RCS-40RTGN type" manufactured by Hisaka Works, Ltd.), followed by pressurization. The ambient temperature was raised to 121°C and held at this temperature for 30 minutes. Then, the temperature was cooled to about 40°C, and the film for evaluation and the container for evaluation were taken out from the testing machine. Hereinafter, the film for evaluation and the container for evaluation subjected to the sterilization treatment are referred to as a film for evaluation after heat treatment and a container for evaluation after heat treatment, respectively, and the film for evaluation before the sterilization treatment is referred to as a film for evaluation before heat treatment.

### <Measurement of HAZE>

In accordance with JIS K7136, HAZE was measured on the film for evaluation before heat treatment and the film for evaluation after heat treatment, and the transparency of the films was evaluated. The results thereof are shown in Table 1.

### <Evaluation of adhesion strength>

Each of the film for evaluation before heat treatment and the film for evaluation after heat treatment was cut into a strip with a width of 15 mm, and in accordance with JIS K6854, a T-peel test between the base material layer and the heat seal layer was conducted at 23°C and a speed of 100 mm/min. The results thereof are shown in Table 1.

When the adhesion strength was 30 N/15 mm or more, it was not possible to measure the value of adhesion strength. This case is indicated as "Not peelable".

### <Evaluation on whether or not sealed portion is maintained>

Whether or not the sealed portion of the container for evaluation after heat treatment was maintained was evaluated on the basis of the criteria below. The results thereof are shown in Table 1.
O: No water leakage occurs when taken out from the testing machine, and no water leakage occurs even when the container is pushed.
×: Water leakage occurs when taken out from the testing machine.

### <Evaluation of heat seal strength>

The film for evaluation before heat treatment in each of Examples 1 and 3 and Comparative Example 1 was cut into sheets of 100 mm × 100 mm. Two of the sheets were overlapped such that the cyclic polyolefin layers faced each other, and central portions in the length direction of the film for evaluation were heat-sealed with a width of 10 mm under the conditions described below using a heat sealer (manufactured by Sagawa Manufacturing, Inc).
Pressure: 0.3 MPa
Time: 3.0 seconds
Seal bar: 10 mm
Temperature: 140 to 220°C

Subsequently, the peel strength was measured by peeling by pulling non-heat-sealed portions of the film for evaluation in directions separating from each other. The results thereof are shown in Table 1. As described above, the heat seal strength of the weak sealed portion is less than 10 N/10 mm, and preferably 0.1 to 9 N/10 mm. The heat seal strength of the strong sealed portion is preferably 10 N/10 mm or more. Therefore, a heat seal strength of about 10 N/10 mm is preferable.

**[Table 1]**

| | | | Example 1 | Example 2 | Example 3 | Example 4 | Comparative Example 1 | Comparative Example 2 | Comparative Example 3 |
|---|---|---|---|---|---|---|---|---|---|
| Film structure | Cyclic polyolefin (Heat seal layer) | | A-1 | A-1 | A-2 | A-2 | a-1 | a-1 | a-2 |
| | Polypropylene resin (Base material layer) | | B-1 | B-2 | B-1 | B-2 | B-1 | B-2 | B-2 |
| HAZE [%] | Before heat treatment | | 6.9 | 7.6 | 7.0 | 8.3 | 4.4 | 15.8 | |
| | After heat treatment | | 10.4 | 12.3 | 9.4 | 11.9 | 19.8 | 21.8 | |
| Adhesion strength [N/15mm] | Before heat treatment | | Not peelable | Not peelable | Not peelable | Not peelable | 0.0 | 0.1 | |
| | After heat treatment | | Not peelable | Not peelable | Not peelable | Not peelable | 0.0 | 0.2 | |
| Whether or not sealed portion was maintained | | | ○ | ○ | ○ | ○ | × | × | Not evaluated |
| | | 140 | 0.1 | - | 0.0 | - | 0.3 | - | |
| | | 150 | 0.2 | - | 0.1 | - | 0.4 | - | |
| | | 160 | 0.5 | - | 0.3 | - | 0.4 | - | |
| Heat seal strength [N/10mm] | Seal temperature [°C] | 170 | 1.3 | - | 0.6 | - | 0.4 | - | |
| | | 180 | 3.3 | - | 3.9 | - | 0.4 | - | |
| | | 190 | 11.3 | - | 10.5 | - | 0.7 | - | |
| | | 200 | 10.7 | - | 10.7 | - | 1.5 | - | |
| | | 210 | 12.7 | - | 11.5 | - | 1.3 | - | |
| | | 220 | 15.7 | - | 13.5 | - | 1.6 | - | |

### [Evaluation results]

As shown in Table 1, in Examples 1 to 4 in which the hydrogenated block copolymer of the present invention was used for the heat seal layer, the adhesion with the base material layer was very good, and the Haze after heat treatment was not significantly increased as compared with that before heat treatment. The heat-sealing properties were also very good, and no water leakage occurred from the container for evaluation after heat treatment.

In Comparative Examples 1 and 2 in which a cyclic polyolefin that is a ring-opening polymer of a norbornene-based monomer was used for the heat seal layer, the adhesion with the base material layer was poor, and the increase in the HAZE due to heat treatment was large. Moreover, because of poor heat-sealing properties, water leakage occurred from the container for evaluation after heat treatment. Thus, it is clear that the container for evaluation is unsuitable as a medical container requiring heat resistance and sterilization treatment.

In Comparative Example 3 in which a cyclic polyolefin that is a copolymer of a monomer having a norbornene skeleton and ethylene was used for the heat seal layer, many fisheyes were generated during film formation, and a practical multilayer body was not obtained.

### <Evaluation of heat seal strength with port portion>

Using the film for evaluation before heat treatment in each of Examples 1 to 4 and Comparative Example 1 and a homopolypropylene sheet (polypropylene being "NOVATEC PP MA3" manufactured by Japan Polypropylene Corporation) formed by injection molding with a thickness of 2 mm, the cyclic polyolefin layer and the homopolypropylene sheet were overlapped so as to face each other, and central portions in the length direction of the film for evaluation were heat-sealed with a width of 10 mm under the conditions described below using a heat sealer (manufactured by Sagawa Manufacturing, Inc).

Here, the homopropylene sheet with a thickness of 2 mm simulates a port portion of an infusion bag. The evaluation result here means the heat seal strength between the port portion and the heat seal layer in the infusion bag.
Pressure: 0.2 MPa
Time: 2.0 seconds
Seal bar: 10 mm in width
Temperature: 200 to 240°C

Subsequently, the peel strength was measured by peeling by pulling the non-heat-sealed portion of the film for evaluation in a direction separating from the homopolypropylene sheet ("homo PP sheet" in Table). The results thereof are shown in Table 2.

This heat seal strength corresponds to the fusion bond strength with the port portion of the medical container, and is preferably 10 N/10 mm or more, and more preferably 15 N/10 mm or more.

Note that, in table 2, "-" indicates not measured.

**[Table 2]**

| | | | Example 1 | Example 2 | Example 3 | Example 4 | Comparative Example 1 |
|---|---|---|---|---|---|---|---|
| Heat seal strength with homo PP sheet [N/10mm] | Seal temperature [°C] | 200 | - | 19 | 14 | - | <1 |
| | | 220 | 24.3 | 18.5 | 18.5 | 18.7 | <1 |
| | | 240 | 20.7 | 19.3 | 20.8 | 19.8 | <1 |

### [Evaluation results]

As shown in Table 2, in Examples 1 to 4 in which the hydrogenated block copolymer of the present invention was used for the heat seal layer, heat-sealing properties with the homopropylene sheet are very good.

On the other hand, in Comparative Example 1 in which a cyclic polyolefin that is a ring-opening polymer of a norbornene-based monomer was used for the heat seal layer, because of poor heat-sealing properties with the homopropylene sheet, it is clear that the cyclic polyolefin is unsuitable as a heat seal layer of an infusion bag provided with a port portion made of the homopropylene.

While the present invention has been described in detail using a specific embodiment, it should be apparent to those skilled in the art that various modifications can be made without departing from the scope of the present invention.

## Claims

1. A multilayer body comprising a base material layer containing a polypropylene resin and a heat seal layer containing a cyclic polyolefin,
wherein the cyclic polyolefin is a hydrogenated block copolymer having a hydrogenated aromatic vinyl polymer block unit which is a hydrogenated polymer block composed of aromatic vinyl monomer units and a hydrogenated conjugated diene polymer block unit which is a hydrogenated polymer block composed of conjugated diene monomer units, and
the hydrogenated block copolymer has at least two hydrogenated aromatic vinyl polymer block units and at least one hydrogenated conjugated diene polymer block unit.

2. The multilayer body according to Claim 1, wherein the content of the hydrogenated aromatic vinyl polymer block unit in the hydrogenated block copolymer is 50 to 99 mol%.

3. The multilayer body according to Claim 1 or **2,** wherein the adhesion strength (before heat treatment) between the base material layer containing the polypropylene resin and the heat seal layer containing the cyclic polyolefin is 30 *N*/*15* mm or more.

4. The multilayer body according to any one of Claims 1 to 3, wherein the adhesion strength (after heat treatment) between the base material layer containing the polypropylene resin and the heat seal layer containing the cyclic polyolefin is 30 *N*/*15* mm or more.

5. A container comprising a multilayer body as defined in any of claim 1 to 4, the container being formed by joining portions of the heat seal layer of the multilayer body.

6. The container according to Claim 5, wherein the hydrogenated aromatic vinyl polymer block unit has a hydrogenation level of 90% or more, and the hydrogenated conjugated diene polymer block unit has a hydrogenation level of 95% or more.

7. The container according to Claim 5 or 6, wherein the hydrogenated aromatic vinyl polymer block unit consists of hydrogenated polystyrene, and the content of the hydrogenated polystyrene in the cyclic polyolefin is 50 to 99 mole percent.

8. The container according to any one of Claims 5 to 7, wherein the hydrogenated conjugated diene polymer block unit consists of hydrogenated polybutadiene, and the content of the hydrogenated polybutadiene in the cyclic polyolefin is 1 to 50 mole percent.

9. The container according to any one of Claims 5 to 8, wherein the base material layer and the heat seal layer are directly laminated.

10. The container according to any one of Claims 5 to 9, wherein the polypropylene resin of the base material layer and the heat seal layer are directly laminated.

11. The container according to any one of Claims 5 to 10, wherein the base material layer is made of a polypropylene resin.

12. A medical container comprising the container according to any one of Claims 5 to 11.

13. An infusion bag comprising the medical container according to Claim 12.

14. The infusion bag according to Claim 13 including a port portion.

15. The infusion bag according to Claim 14, wherein the port portion contains a polypropylene resin.

16. The infusion bag according to Claim 14 or 15, wherein the port portion and the heat seal layer are directly heat-sealed to each other.

17. The infusion bag according to any one of Claims 14 to 16, wherein the port portion is made of a polypropylene resin.

18. A medical container comprising a multilayer body as defined in any of claims 1 to 4, the medical container being formed by joining portions of the heat seal layer of the multilayer body.

## Patentansprüche

1. Mehrschichtkörper, umfassend eine Basismaterialschicht, die ein Polypropylenharz enthält, und eine Heißsiegelschicht, die ein cyclisches Polyolefin enthält,
wobei das cyclische Polyolefin ein hydriertes Blockcopolymer ist mit einer hydrierten aromatischen Vinylpolymer-Blockeinheit, bei der es sich um einen hydrierten Polymerblock aus aromatischen Vinylmonomereinheiten handelt, und einer hydrierten konjugierten Dienpolymer-Blockeinheit, bei der es sich um einen hydrierten Polymerblock aus konjugierten Dienmonomereinheiten handelt, und
wobei das hydrierte Blockcopolymer mindestens zwei hydrierte aromatische Vinylpolymer-Blockeinheiten und mindestens eine hydrierte konjugierte Dienpolymer-Blockeinheit aufweist.

2. Mehrschichtkörper gemäß Anspruch 1, wobei der Gehalt an hydrierten aromatischen Vinylpolymer-Blockeinheiten in dem hydrierten Blockcopolymer 50 bis 99 Mol-% beträgt.

3. Mehrschichtkörper gemäß Anspruch 1 oder 2, wobei die Haftfestigkeit (vor der Wärmebehandlung) zwischen der das Polypropylenharz enthaltenden Basismaterialschicht und der das cyclische Polyolefin enthaltenden Heißsiegelschicht 30 N/15 mm oder mehr beträgt.

4. Mehrschichtkörper gemäß mindestens einem der Ansprüche 1 bis 3, wobei die Haftfestigkeit (nach der Wärmebehandlung) zwischen der das Polypropylenharz enthaltenden Basismaterialschicht und der das cyclische Polyolefin enthaltenden Heißsiegelschicht 30 N/15 mm oder mehr beträgt.

5. Behälter, der einen Mehrschichtkörper wie in mindestens einem der Ansprüche 1 bis 4 definiert, umfasst, wobei der Behälter durch Verbinden von Abschnitten der Heißsiegelschicht des Mehrschichtkörpers gebildet ist.

6. Behälter gemäß Anspruch 5, wobei die hydrierte aromatische Vinylpolymer-Blockeinheit einen Hydrierungsgrad von 90 % oder mehr aufweist und die hydrierte konjugierte Dienpolymer-Blockeinheit einen Hydrierungsgrad von 95 % oder mehr aufweist.

7. Behälter gemäß Anspruch 5 oder 6, wobei die hydrierte aromatische Vinylpolymer-Blockeinheit aus hydriertem Polystyrol besteht und der Gehalt an hydriertem Polystyrol im cyclischen Polyolefin 50 bis 99 Molprozent beträgt.

8. Behälter gemäß mindestens einem der Ansprüche 5 bis 7, wobei die hydrierte konjugierte Dienpolymer-Blockeinheit aus hydriertem Polybutadien besteht und der Gehalt an hydriertem Polybutadien im cyclischen Polyolefin 1 bis 50 Molprozent beträgt.

9. Behälter gemäß mindestens einem der Ansprüche 5 bis 8, wobei die Basismaterialschicht und die Heißsiegelschicht direkt laminiert sind.

10. Behälter gemäß mindestens einem der Ansprüche 5 bis 9, wobei das Polypropylenharz der Basismaterialschicht und der Heißsiegelschicht direkt laminiert sind.

11. Behälter gemäß mindestens einem der Ansprüche 5 bis 10, wobei die Basismaterialschicht aus einem Polypropylenharz aufgebaut ist.

12. Medizinischer Behälter, der den Behälter gemäß mindestens einem der Ansprüche 5 bis 11 umfasst.

13. Infusionsbeutel, der den medizinischen Behälter gemäß Anspruch 12 umfasst.

14. Infusionsbeutel gemäß Anspruch 13, der einen Anschlussabschnitt umfasst.

15. Infusionsbeutel gemäß Anspruch 14, wobei der Anschlussabschnitt ein Polypropylenharz enthält.

16. Infusionsbeutel gemäß Anspruch 14 oder 15, wobei der Anschlussabschnitt und die Heißsiegelschicht direkt miteinander heißversiegelt sind.

17. Infusionsbeutel gemäß mindestens einem der Ansprüche 14 bis 16, wobei der Anschlussabschnitt aus einem Polypropylenharz aufgebaut ist.

18. Medizinischer Behälter, der einen Mehrschichtkörper gemäß mindestens einem der Ansprüche 1 bis 4 umfasst, wobei der medizinische Behälter durch Verbinden von Abschnitten der Heißsiegelschicht des Mehrschichtkörpers gebildet ist.

## Revendications

1. Corps multicouche comprenant une couche de matériau de base contenant une résine de polypropylène et une couche de thermoscellage contenant une polyoléfine cyclique,
dans lequel la polyoléfine cyclique est un copolymère bloc hydrogéné présentant une unité de bloc polymère de vinyl-aromatique hydrogéné, qui est un bloc polymère hydrogéné composé d'unités monomères de vinyl-aromatique, et une unité de bloc polymère de diène conjugué hydrogéné, qui est un bloc polymère hydrogéné composé d'unités monomères de diène conjugué, et
le copolymère bloc hydrogéné présente au moins deux unités de bloc polymère de vinyl-aromatique hydrogéné et au moins une unité de bloc polymère de diène conjugué hydrogéné.

2. Corps multicouche selon la revendication 1, dans lequel la teneur en unité de bloc polymère de vinyl-aromatique hydrogéné dans le copolymère bloc hydrogéné est de 50 à 99 mol%.

3. Corps multicouche selon la revendication 1 ou la revendication 2, dans lequel la force d'adhésion (avant traitement thermique) entre la couche de matériau de base contenant la résine de polypropylène et la couche de thermoscellage contenant la polyoléfine cyclique est de 30 N/15 mm ou plus.

4. Corps multicouche selon l'une quelconque des revendications 1 à 3, dans lequel la force d'adhésion (après traitement thermique) entre la couche de matériau de base contenant la résine de polypropylène et la couche de thermoscellage contenant la polyoléfine cyclique est de 30 N/15 mm ou plus.

5. Contenant comprenant un corps multicouche tel que défini dans l'une quelconque des revendications 1 à 4, le contenant étant formé par assemblage de parties de la couche de thermoscellage du corps multicouche.

6. Contenant selon la revendication 5, dans lequel l'unité de bloc polymère de vinyl-aromatique hydrogéné présente un degré d'hydrogénation de 90 % ou plus, et l'unité de bloc polymère de diène conjugué hydrogéné présente un degré d'hydrogénation de 95 % ou plus.

7. Contenant selon la revendication 5 ou la revendication 6, dans lequel l'unité de bloc polymère de vinyl-aromatique hydrogéné consiste en polystyrène hydrogéné, et la teneur en polystyrène hydrogéné dans la polyoléfine cyclique est de 50 à 99 pour cent en moles.

8. Contenant selon l'une quelconque des revendications 5 à 7, dans lequel l'unité de bloc polymère de diène conjugué hydrogéné consiste en polybutadiène hydrogéné, et la teneur en polybutadiène hydrogéné dans la polyoléfine cyclique est de 1 à 50 pour cent en moles.

9. Contenant selon l'une quelconque des revendications 5 à 8, dans lequel la couche de matériau de base et la couche de thermoscellage sont directement laminées.

10. Contenant selon l'une quelconque des revendications 5 à 9, dans lequel la résine de polypropylène de la couche de matériau de base et la couche de thermoscellage sont directement laminées l'une à l'autre.

11. Contenant selon l'une quelconque des revendications 5 à 10, dans lequel la couche de matériau de base est faite d'une résine de polypropylène.

12. Contenant médical comprenant le contenant selon l'une quelconque des revendications 5 à 11.

13. Poche de perfusion comprenant le contenant médical selon la revendication 12.

14. Poche de perfusion selon la revendication 13 incluant une partie de port.

15. Poche de perfusion selon la revendication 14, dans laquelle la partie de port contient une résine de polypropylène.

16. Poche de perfusion selon la revendication 14 ou la revendication 15, dans laquelle la partie de port et la couche de thermoscellage sont directement thermoscellées l'une à l'autre.

17. Poche de perfusion selon l'une quelconque des revendications 14 à 16, dans laquelle la partie de port est formée d'une résine de polypropylène.

18. Contenant médical comprenant un corps multicouche tel que défini dans l'une quelconque des revendications 1 à 4, le contenant médical étant formé par assemblage de parties de la couche de thermoscellage du corps multicouche.
